# EUROPEAN PATENT APPLICATION

(11) **EP 4 657 857 A1**
(43) Date of publication of application: **03.12.2025**
(21) Application number: 24315259.2
(22) Date of filing: 31.05.2024
(51) Int. Cl.: H04N 19/30, H04N 19/46, H04N 19/597, H04N 19/70

(54) **METHODS FOR VIDEO ENCODING AND VIDEO DECODING, VIDEO ENCODER AND VIDEO DECODER FOR SUPPORTING MULTI-LAYER RGBD VIDEO PROFILES**

(71) Applicant: Beijing Xiaomi Mobile Software Co., Ltd., Beijing 100085 (CN)
(72) Inventor: Thomas, Emmanuel, Beijing, 100085 (CN); Potetsianakis, Emmanouil, Beijing, 100085 (CN); Alexiou, Evangelos, Beijing, 100085 (CN)
(74) Representative: Schairer, Oliver Michael

(57) **Abstract**

A video encoder (100) for encoding according to an embodiment is provided. The video encoder (100) is configured for encoding a first video sequence into a first layer of a group of layers of a bitstream. Moreover, the video encoder (100) is configured for encoding a second video sequence into a second layer of the group of layers of the bitstream. Furthermore, the video encoder (100) is configured for writing or encoding profile and level information into the bitstream, wherein the profile and level information comprises a first constraint for the group of layers.

## Description

### FIELD

The present application generally relates to a method for video encoding, a method for video decoding, a video encoder and a video decoder for supporting multi-layer RGBD video profiles.

### BACKGROUND

The process of sensing depth in a real scene is also known as range imaging, see [7], Wikipedia contributors, "Range imaging," Wikipedia, The Free Encyclopedia, https://en.wikipedia.org/w/index.php?tit!e=Range_imaging&o!did=1050828429 (accessed May 10, 2022), which explains that range imaging describes a collection of techniques for 2D images depicting the distances to points from a sensor.

In [7], different sensor and techniques are described to generate a depth map from sensed environment, namely stereo triangulation, sheet of light triangulation, structured light, time-of-flight, interferometry, coded aperture.

### SUMMARY

A 1^{st} embodiment is provided, which is a method for encoding, wherein the method comprises:
encoding a first video sequence into a first layer of a group of layers of a bitstream,
encoding a second video sequence into a second layer of the group of layers of the bitstream, and
writing or encoding profile and level information into the bitstream, wherein the profile and level information comprises a first constraint for the group of layers.

A 2^{nd} embodiment is provided, which is a method according to the 1^{st} embodiment,
wherein the first video sequence comprises a color video,
wherein encoding the first video sequence into the first layer of the group of layers of the bitstream comprises encoding the color video into the first layer, wherein the first layer is a primary layer,
wherein the second video sequence comprises a depth video,
wherein encoding the second video sequence into the second layer of the group of layers of the bitstream comprises encoding the depth video into the second layer, wherein the second layer is an auxiliary layer.

A 3^{rd} embodiment is provided, which is a method according to the 1^{st} or 2^{nd} embodiment,
wherein the bitstream comprises, as the constraint, an indication on a maximum number of layers of the group of layers being a maximum number of layers present in the bitstream for encoding the first video sequence, for encoding the second video sequence, and for possibly encoding further information being associated with the first video sequence or being associated with the second video sequence.

A 4^{th} embodiment is provided, which is a method according to the 3^{rd} embodiment,
wherein the indication on the maximum number of layers is smaller than a maximum possible number of layers allowed by a video codec.

A 5^{th} embodiment is provided, which is a method according to the 3^{rd} or 4^{th} embodiment,
wherein the maximum number of layers is 3.

A 6^{th} embodiment is provided, which is a method according to one of the preceding embodiments,
wherein the bitstream comprises an encoding of a confidence map being associated with the second video sequence, wherein the confidence map indicates information on a confidence of pixels or portions of images of the second video sequence.

A 7^{th} embodiment is provided, which is a method according to the 6^{th} embodiment, wherein the method comprises encoding the confidence map in another auxiliary layer of the group of layers, for example,

A 8^{th} embodiment is provided, which is a method according to the 7^{th} embodiment,
wherein said other auxiliary layer is an auxiliary layer of the second layer.

A 9^{th} embodiment is provided, which is a method according to one of the 6^{th} to 8^{th} embodiments,
wherein the bitstream comprises another auxiliary layer of the group of layers being an auxiliary layer of the second layer which comprises an encoding of the second video data stream.

An 10^{th} embodiment is provided, which is a method according to the 6^{th} embodiment,
wherein the method comprises encoding the confidence map as metadata in the bitstream.

A 11^{th} embodiment is provided, which is a method according to the 10^{th} embodiment,
wherein the method comprises encoding the confidence map in a Supplemental Enhancement Information message of the bitstream.

A 12^{th} embodiment is provided, which is a method according to one of the preceding embodiments,
wherein the method comprises generating encoded frames of each layer of the group of layers, and
wherein the method comprises writing the encoded frames of each layer of the group of layers into the bitstream.

A 13^{th} embodiment is provided, which is a method according to one of the preceding embodiments, wherein the method comprises generating the bitstream such that the profile and level information of the bitstream comprises profile and level information for the group of layers of the bitstream.

A 14^{th} embodiment is provided, which is a method according to one of the preceding embodiments,
wherein the method comprises generating the bitstream such that the bitstream obeys the following constraint:
   the value of vps_max_layers_minus1 of each VPS shall be set equal to 2,
wherein vps_max layers minus1 plus 1 specifies the number of layers specified by the VPS, which is the maximum allowed number of layers in each CVS referring to the VPS.

A 15^{th} embodiment is provided, which is a method according to one of the preceding embodiments,
wherein the method comprises generating the bitstream such that the bitstream obeys the following constraints:
   referenced SPSs shall have sps_chroma_format_idc equal to 0 or 1,
   referenced SPSs shall have sps_bitdepth_minus8 in the range of 0 to 2, inclusive,
   referenced SPSs shall have sps_palette_enabled_flag equal to 0,
   the value of vps_max_layers_minus1 of each VPS shall be set equal to 2,
wherein vps_max_layers_minus1 plus 1 specifies the number of layers specified by the VPS, which is the maximum allowed number of layers in each CVS referring to the VPS,
wherein sps_chroma_format_idc specifies the chroma sampling relative to the luma sampling,
wherein sps_bitdepth_minus8 specifies the bit depth of the samples of the luma and chroma arrays, BitDepth, and the value of the luma and chroma quantization parameter range offset,
wherein sps_palette_enabled_flag equal to 1 specifies that the palette prediction mode is enabled for the CLVS; sps_palette_enabled_flag equal to 0 specifies that the palette prediction mode is disabled for the CLVS; when sps_palette_enabled_flag is not present, it is inferred to be equal to 0.

A 16^{th} embodiment is provided, which is a method according to one of the preceding embodiments,
wherein the method comprises generating the bitstream such that a structure profile_tier_level of the bitstream comprises a syntax element global level_idc,
wherein profile_tier_level provides level information and, optionally, profile, tier, sub profile, and general constraints information to which the OlsInScope conforms,
wherein the global_level_idc indicates a level to which the current CVS conforms.

A 17^{th} embodiment is provided, which is a method according to the 16^{th} embodiment,
wherein a global level is defined according to the following table:

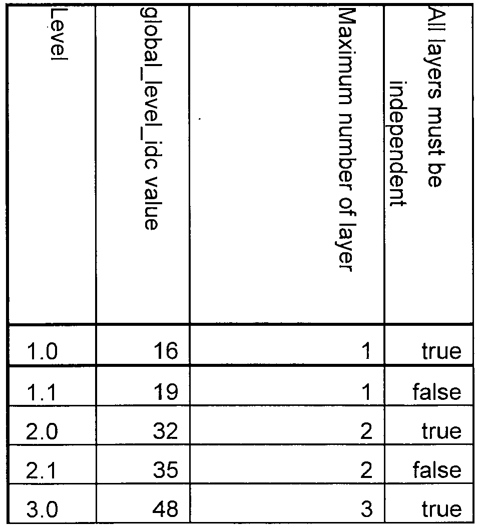

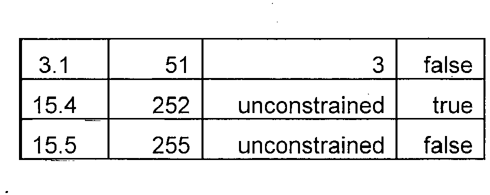

A 18^{th} embodiment is provided, which is a method according to one of the preceding embodiments,
wherein the method comprises encoding the confidence map in a Supplemental Enhancement Information message of the bitstream, wherein the confidence map is represented by the following structure:

| |
|---|
| confidence_map( payloadSize ) { |
| cm_cancel_flag |
| if( ! idsbm_cancel_flag) { |
| cm_height |
| cm_width |
| for(i=0; i < cm_height; i++) |
| for(j=0; j < cm width; j++) |
| cm_valuer [i ][ j ] |
| } |
| } |

wherein cm_cancel_flag equal to 1 indicates that the SEI message cancels the persistence of any previous confidence map SEI message; when equal to 0, the information that should be considered follows,
wherein cm_height specifies the height of the confidence map,
wherein cm_width specifies the width of the confidence map,
wherein cm_value[ i ][ j ] specifies the confidence value of the collocated sample in the associated decoded image; when cm_value[ i j ] is equal to 255, the collocated sample has the highest confidence value; when cm_value [ i ][ j ] is equal to 0, the collocated sample has the lowest confidence value.

A 19^{th} embodiment is provided, which is a method according to one of the preceding embodiments,
wherein the method comprises generating the bitstream such that the bitstream comprises a scalability_dimension_info structure, which comprises:

| |
|---|
| sdi_num_associated_layers_minus1[ i ] |
| for( j = 0: j <= sdi_num_associated_layers_minus1[ i ]; j++ ) |
| sdi_associated_layer_idx[ i ][ j ] |

wherein sdi_num_associated_layers_minus1[ i ] plus 1 specifies the number of associated layers of i-th layer; the value of sdi_num_associated_layers_minus1[ i ] shall be less than or equal to the total number of layers minus one,
wherein sdi_associated_layer_idx[ i ][ j ] specifies the layer index of the j-th associated layer of the i-th layer.

A 20^{th} embodiment is provided, which is a method according to one of the preceding embodiments,
wherein the method comprises generating the bitstream such that the bitstream comprises a scalability_dimension_info structure, which comprises:

| |
|---|
| if( sdi_aux_id[ i ] == 3 ) { |
| sdi_num_associated_aux_depth_layers_minus1[ i ] |
| for( i = 0; i <= sdi_num_associated_aux_depth_layers_minus1[ i ]; j++ ) |
| sdi_associated_aux_depth_layer_idx[i ][ i ] |
| } |

wherein sdi num associated aux depth_layers minus1 [ i ] plus 1 specifies the number of associated auxiliary depth layers of i-th layer; the value of sdi num associated aux depth layers_minus1 [ i ] shall be less than or equal to the total number of auxiliary depth layers,
wherein sdi_associated_aux_depth_layer_idx [ i ][ j ] specifies the layer index of the j-th associated auxiliary depth layer of the i-th layer; the value of sdi_aux_id[ sdi_associated_aux_depth_layer_idx[ i ][ j ] ] shall be equal to 2.

A 21^{st} embodiment is provided, which is a method for decoding a bitstream, wherein the bitstream comprises a first layer and a second layer of a group of layers, wherein the first layer comprises an encoding of a first video sequence, wherein the second layer comprises an encoding of a second video sequence, and wherein the bitstream comprises profile and level information comprising a first constraint for the group of layers, wherein the method comprises:
determining the first constraint based on the bitstream, and
decoding, depending on the first constraint, further data from the bitstream by decoding the first layer of the bitstream, and by decoding the second layer of the bitstream.

A 22^{nd} embodiment is provided, which is a method according to the 21^{st} embodiment,
wherein the first video sequence comprises a color video, wherein the first layer is a primary layer, wherein the second video sequence comprises a depth video, wherein the second layer is an auxiliary layer.

A 23^{rd} embodiment is provided, which is a method according to the 21^{st} or 22^{nd} embodiment, wherein the bitstream comprises, as the first constraint, an indication on a maximum number of layers of the group of layers being a maximum number of layers present in the bitstream for encoding the first video sequence, for encoding the second video sequence, and for possibly encoding further information being associated with the first video sequence or being associated with the second video sequence.

A 24^{th} embodiment is provided, which is a method according to the 23^{rd} embodiment,
wherein the indication on the maximum number of layers is smaller than a maximum possible number of layers allowed by a video codec.

A 25^{th} embodiment is provided, which is a method according to the 23^{rd} or 24^{th} embodiment,
wherein the maximum number of layers is 3.

A 26^{th} embodiment is provided, which is a method according to one of the 21^{st} to 25^{th} embodiments,
wherein the bitstream comprises an encoding of a confidence map being associated with the second video sequence, wherein the confidence map indicates information on a confidence of pixels or portions of images of the second video sequence.

A 27^{th} embodiment is provided, which is a method according to the 26^{th} embodiment,
wherein the method comprises decoding the confidence map from another auxiliary layer of the group of layers.

A 28^{th} embodiment is provided, which is a method according to the 27^{th} embodiment,
wherein said other auxiliary layer is an auxiliary layer of the second layer.

A 29^{th} embodiment is provided, which is a method according to one of the 26^{th} to 28^{th} embodiments,
wherein the bitstream comprises another auxiliary layer of the group of layers being an auxiliary layer of the second layer which comprises an encoding of the second video data stream.

A 30^{th} embodiment is provided, which is a method according to the 26^{th} embodiment,
wherein the method comprises decoding the confidence map from metadata in the bitstream.

A 31^{st} embodiment is provided, which is a method according to the 30^{th} embodiment,
wherein the method comprises decoding the confidence map from a Supplemental Enhancement Information message of the bitstream.

A 32^{nd} embodiment is provided, which is a method according to one of the 21^{st} to 31^{st} embodiments,
wherein the method comprises decoding encoded frames of each layer of the group of layers from the bitstream.

A 33^{rd} embodiment is provided, which is a method according to one of the 21^{st} to 32^{nd} embodiments,
wherein the method comprises obtaining the profile and level information comprising profile and level information for the group of layers of the bitstream.

A 34^{th} embodiment is provided, which is a method according to the 33^{rd} embodiment,
wherein the method comprises obtaining information on a capability of a decoder to decode the bitstream depending on the profile and level information.

A 35^{th} embodiment is provided, which is a method according to one of the 21^{st} to 34^{th} embodiments,
wherein the method comprises decoding the bitstream, which obeys the following constraint:
   the value of vps_max layers minus1 of each VPS shall be set equal to 2,
wherein vps_max_layers_minus1 plus 1 specifies the number of layers specified by the VPS, which is the maximum allowed number of layers in each CVS referring to the VPS.

A 36^{th} embodiment is provided, which is a method according to one of the 21^{st} to 35^{th} embodiments,
wherein the method comprises decoding the bitstream, which obeys the following constraints:
referenced SPSs shall have sps_chroma_format_idc equal to 0 or 1,
referenced SPSs shall have sps_bitdepth_minus8 in the range of 0 to 2, inclusive,
referenced SPSs shall have sps_palette enabled flag equal to 0,
the value of vps_max_layers_minus1 of each VPS shall be set equal to 2,
wherein vps_max_layers_minus1 plus 1 specifies the number of layers specified by the VPS, which is the maximum allowed number of layers in each CVS referring to the VPS,
wherein sps_chroma_format_idc specifies the chroma sampling relative to the luma sampling,
wherein sps_bitdepth_minus8 specifies the bit depth of the samples of the luma and chroma arrays, BitDepth, and the value of the luma and chroma quantization parameter range offset,
wherein sps_palette_enabled_flag equal to 1 specifies that the palette prediction mode is enabled for the CLVS; sps_palette_enabled_flag equal to 0 specifies that the palette prediction mode is disabled for the CLVS; when sps_palette enabled flag is not present, it is inferred to be equal to 0.

A 37^{th} embodiment is provided, which is a method according to one of the 21^{st} to 36^{th} embodiments,
wherein the method comprises decoding the bitstream for which at least one of the following conditions applies:
the bitstream is indicated to conform to a Video and Depth Main 10, Main 10, or Main 10 Still Picture profile,
the bitstream is indicated to conform to a tier that is lower than or equal to a specified tier,
the bitstream is indicated to conform to a level that is not level 15.5 and is lower than or equal to the specified level.

A 38^{th} embodiment is provided, which is a method according to one of the 21^{st} to 37^{th} embodiments,
wherein the method comprises decoding a structure profile_tier_level of the bitstream, which comprises a syntax element global_level_idc,
wherein profile_tier_level provides level information and, optionally, profile, tier, sub profile, and general constraints information to which the OlsInScope conforms,
wherein the global level_idc indicates a level to which the current CVS conforms.

A 39^{th} embodiment is provided, which is a method according to the 38^{th} embodiment,
wherein a global level is defined according to the following table:

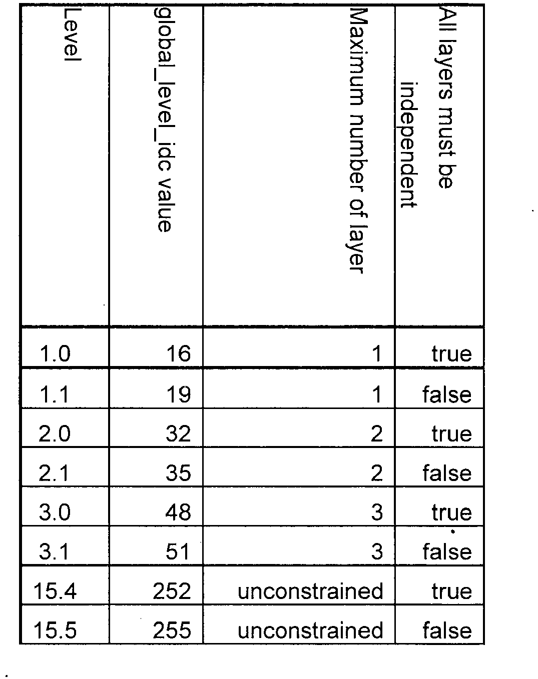

A 40^{th} embodiment is provided, which is a method according to the 26^{th} embodiment,
wherein the method comprises decoding the encoding of the confidence map in a Supplemental Enhancement Information message of the bitstream, wherein the confidence map is represented by the following structure:

| |
|---|
| confidence_map payloadSize ) { |
| cm cancel flag |
| if( ! idsbm_cancel_flag) { |
| cm height |
| cm width |
| for(i=0; i < cm height; i++) |
| for(j=0; i < cm width; j++) |
| cm_value[ i ][ j ] |
| } |
| } |

wherein cm_cancel_flag equal to 1 indicates that the SEI message cancels the persistence of any previous confidence map SEI message; when equal to 0, the information that should be considered follows,
wherein cm_height specifies the height of the confidence map,
wherein cm_width specifies the width of the confidence map,
wherein cm_value[ i ][ j ] specifies the confidence value of the collocated sample in the associated decoded image; when cm_value[ i ][ j ] is equal to 255, the collocated sample has the highest confidence value; when cm_value [ i ][ j ] is equal to 0, the collocated sample has the lowest confidence value.

A 41^{st} embodiment is provided, which is a method according to one of the 21^{st} to 40^{th} embodiments,
wherein the method comprises decoding a scalability_dimension info structure of the bitstream, which comprises:

| |
|---|
| sdi num associated layers_minus1 [ i ] |
| for( j = 0; j <= sdi num associated layers minus1 [ i ]; j++ ) |
| sdi_associated_layer_idx[ i ][ j ] |

wherein sdi_num_associated_layers_minus1 [ i ] plus 1 specifies the number of associated layers of i-th layer; the value of sdi_num_associated_layers_minus1 [ i ] shall be less than or equal to the total number of layers minus one,
wherein sdi_associated_layer_idx[ i ][ j ] specifies the layer index of the j-th associated layer of the i-th layer.

A 42^{nd} embodiment is provided, which is a method according to one of the 21^{st} to 41^{st} embodiments,
wherein the method comprises decoding a scalability_dimension_info structure of the bitstream, which comprises:

| |
|---|
| if( sdi_aux_id[ i ] == 3 ) { |
| sdi_num_associated_aux_depth_layers_minus1[ i ] |
| for( j = 0; j <= sdi_num_associated_aux_depth_layers_minus1[ i ]; j++ ) |
| sdi_associated_aux_depth_layer_idx[ i ][ j ] |
| } |

wherein sdi_num associated aux depth layers_minus1 [ i ] plus 1 specifies the number of associated auxiliary depth layers of i-th layer; the value of sdi_num_associated_aux_depth_layers_minus1 [ i ] shall be less than or equal to the total number of auxiliary depth layers,
wherein sdi_associated_aux_depth_layer_idx [ i ][ j ] specifies the layer index of the j-th associated auxiliary depth layer of the i-th layer; the value of sdi_aux_id[ sdi_associated_aux_depth_layer_idx[ i ][ j ] ] shall be equal to 2.

A 43^{rd} embodiment is provided, which is a computer program for implementing the method of one of the preceding embodiments when being executed on a computer or signal processor.

A 44^{th} embodiment is provided, which is a bitstream, comprising:
a first layer of a group of layers, wherein the first layer comprises an encoding a first video sequence,
a second layer of the group of layers, wherein the second layer comprises an encoding of a second video sequence, and
profile and level information comprising a first constraint for the group of layers.

A 45^{th} embodiment is provided, which is a bitstream according to the 44^{th} embodiment,
wherein the first video sequence comprises a color video,
wherein the color video is encoded into the first layer, wherein the first layer is a primary layer,
wherein the second video sequence comprises a depth video,
wherein the depth video is encoded into the second layer, wherein the second layer is an auxiliary layer.

A 46^{th} embodiment is provided, which is a bitstream according to the 45^{th} embodiment,
wherein the bitstream comprises, as the first constraint, an indication on a maximum number of layers of the group of layers being a maximum number of layers present in the bitstream for encoding the color video, for encoding the depth video, and for possibly encoding further information being associated with the color video or being associated with the depth video.

A 47^{th} embodiment is provided, which is a bitstream according to the 46^{th} embodiment,
wherein the indication on the maximum number of layers is smaller than a maximum possible number of layers allowed by a video codec.

A 48^{th} embodiment is provided, which is a bitstream according to the 46^{th} or 47^{th} embodiment,
wherein the maximum number of layers is 3.

A 49^{th} embodiment is provided, which is a bitstream according to one of the 45^{th} to 48^{th} embodiments,
wherein the bitstream comprises an encoding a confidence map being associated with the depth video, wherein the confidence map indicates information on a confidence of pixels or portions of images of the depth video.

A 50^{th} embodiment is provided, which is a bitstream according to the 49^{th} embodiment,
wherein the confidence map is encoded in another auxiliary layer of the group of layers of the bitstream.

A 51^{st} embodiment is provided, which is a bitstream according to the 50^{th} embodiment,
wherein said other auxiliary layer is an auxiliary layer of the second layer.

A 52^{nd} embodiment is provided, which is a bitstream according to one of the 49^{th} to 51^{st} embodiments,
wherein the bitstream comprises another auxiliary layer of the group of layers being an auxiliary layer of the second layer which comprises an encoding of the second video data stream.

A 53^{rd} embodiment is provided, which is a bitstream according to the 49^{th} embodiment,
wherein the confidence map is encoded as metadata in the bitstream.

A 54^{th} embodiment is provided, which is a bitstream according to the 53^{rd} embodiment,
wherein the confidence map is encoded in a Supplemental Enhancement Information message of the bitstream.

A 55^{th} embodiment is provided, which is a bitstream according to one of the 44^{th} to 54^{th} embodiments,
wherein the bitstream comprises encoded frames of each layer of the group of layers.

A 56^{th} embodiment is provided, which is a bitstream according to one of the 44^{th} to 55^{th} embodiments,
wherein the profile and level information of the bitstream comprises profile and level information for the group of layers of the bitstream.

A 57^{th} embodiment is provided, which is a bitstream according to one of the 44^{th} to 56^{th} embodiments,
wherein the bitstream obeys the following constraint:
   the value of vps_max_layers_minus1 of each VPS shall be set equal to 2,
wherein vps_max_layers_minus1 plus 1 specifies the number of layers specified by the VPS, which is the maximum allowed number of layers in each CVS referring to the VPS.

A 58^{th} embodiment is provided, which is a bitstream according to one of the 44^{th} to 57^{th} embodiments,
wherein the bitstream obeys the following constraints:
   referenced SPSs shall have sps_chroma_format_idc equal to 0 or 1,
   referenced SPSs shall have sps_bitdepth_minus8 in the range of 0 to 2, inclusive,
   referenced SPSs shall have sps_palette_enabled_flag equal to 0,
   the value of vps_max_layers_minus1 of each VPS shall be set equal to 2,
wherein vps_max_layers_minus1 plus 1 specifies the number of layers specified by the VPS, which is the maximum allowed number of layers in each CVS referring to the VPS,
wherein sps_chroma_format_idc specifies the chroma sampling relative to the luma sampling,
wherein sps_bitdepth_minus8 specifies the bit depth of the samples of the luma and chroma arrays, BitDepth, and the value of the luma and chroma quantization parameter range offset,
wherein sps_palette_enabled_flag equal to 1 specifies that the palette prediction mode is enabled for the CLVS; sps_palette_enabled_flag equal to 0 specifies that the palette prediction mode is disabled for the CLVS; when sps_palette_enabled_flag is not present, it is inferred to be equal to 0.

A 59^{th} embodiment is provided, which is a bitstream according to one of the 44^{th} to 58^{th} embodiments,
wherein the bitstream comprises a structure profile_tier_level, which comprises a syntax element global_level_idc,
wherein profile_tier_level provides level information and, optionally, profile, tier, sub profile, and general constraints information to which the OlsInScope conforms,
wherein the global_level_idc indicates a level to which the current CVS conforms.

A 60^{th} embodiment is provided, which is a bitstream according to the 59^{th} embodiment,
wherein a global level is defined according to the following table:

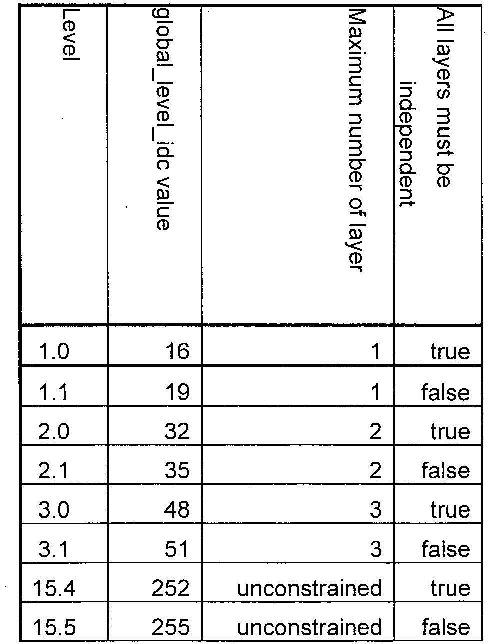

A 61^{st} embodiment is provided, which is a bitstream according to the 49^{th} embodiment, wherein a Supplemental Enhancement Information message of the bitstream comprises the encoding of the confidence map, wherein the confidence map is represented by the following structure:

| |
|---|
| confidence_map( payloadSize ) { |
| cm_cancel_flag |
| if( ! idsbm_cancel_flag) { |
| cm height |
| cm width |
| for(i=0; i < cm_height; i++) |
| for(j=0: i < cm_width: j++) |
| cm_value[ i ][ i ] |
| } |
| } |

wherein cm_cancel_flag equal to 1 indicates that the SEI message cancels the persistence of any previous confidence map SEI message; when equal to 0, the information that should be considered follows,
wherein cm_height specifies the height of the confidence map,
wherein cm_width specifies the width of the confidence map,
wherein cm_value[ i ][ j ] specifies the confidence value of the collocated sample in the associated decoded image; when cm_value[ i ][ j ] is equal to 255, the collocated sample has the highest confidence value; when cm_value [ i ][ j ] is equal to 0, the collocated sample has the lowest confidence value.

A 62^{nd} embodiment is provided, which is a bitstream according to one of the 44^{th} to 61^{st} embodiments,
wherein the bitstream comprises a scalability_dimension_info structure, which comprises:

| |
|---|
| sdi_num_associated_layers_minus1[ i ] |
| for( j = 0: j <= sdi_num_associated_layers_minus1 [ i ]; j++ ) |
| sdi_associated_layer_idx[ i ][ j ] |

wherein sdi_num_associated_layers_minus1 [ i ] plus 1 specifies the number of associated layers of i-th layer; the value of sdi_num_associated_layers_minus1[ i ] shall be less than or equal to the total number of layers minus one,
wherein sdi_associated_layer_idx[ i ][ j ] specifies the layer index of the j-th associated layer of the i-th layer.

A 63^{rd} embodiment is provided, which is a bitstream according to one of the 44^{th} to 62^{nd} embodiments,
wherein the bitstream comprises a scalability_dimension_info structure, which comprises:

| |
|---|
| if( sdi_aux_id[ i ] == 3 { |
| sdi_num_associated_aux_depth_layers_minus1[ i ] |
| for( j = 0; j <= sdi_num_associated_aux_depth_layers_minus1[ i ]; j++ ) |
| sdi_associated_aux _depth_layer_idx[ i ][ j ] |
| } |

wherein sdi_num_associated_aux_depth_layers_minus1 [ i ] plus 1 specifies the number of associated auxiliary depth layers of i-th layer; the value of sdi_num_associated_aux_depth_layers_minus1 [ i ] shall be less than or equal to the total number of auxiliary depth layers,
wherein sdi_associated_aux_depth_layer_idx [ i ][ j ] specifies the layer index of the j-th associated auxiliary depth layer of the i-th layer; the value of sdi_aux_id[ sdi_associated_aux_depth_layer_idx[ i ][ j ] ] shall be equal to 2.

A 64^{th} embodiment is provided, which is a bitstream formatted to include the first video sequence, the second video sequence, and the profile and level information, wherein the bitstream is obtained from a method according one of the 1^{st} to 20^{th} embodiments.

A 65^{th} embodiment is provided, which is an embodiment according to one of the preceding embodiments,
wherein the profile and level information further comprises second constraints for the first layer and the second layer respectively.

A 66^{th} embodiment is provided, which is a video encoder for encoding,
wherein the video encoder is configured for encoding a first video sequence into a first layer of a group of layers of a bitstream,
wherein the video encoder is configured for encoding a second video sequence into a second layer of the group of layers of the bitstream, and
wherein the video encoder is configured for writing or encoding profile and level information into the bitstream, wherein the profile and level information comprises a first constraint for the group of layers.

A 67^{th} embodiment is provided, which is a video decoder for decoding a bitstream, wherein the bitstream comprises a first layer and a second layer of a group of layers, wherein the first layer comprises an encoding of a first video sequence, wherein the second layer comprises an encoding of a second video sequence, and wherein the bitstream comprises profile and level information comprising a first constraint for the first video sequence and for the second video sequence,
wherein the video decoder is configured for determining the first constraint based on the bitstream, and
wherein the video decoder is configured for decoding, depending on the first constraint, further data from the bitstream by decoding the first layer of the bitstream, and by decoding the second layer of the bitstream.

A 68^{th} embodiment is provided, which is an apparatus comprising means for performing one of the methods according to one of the 1^{st} to 42^{th} embodiments.

A 69^{th} embodiment is provided, which is a system, comprising:
a video encoder according to the 65^{th} embodiment for encoding, and
a video decoder according to the 66^{th} embodiment for decoding.

A 70^{th} embodiment is provided, which is an electronic device, comprising:
a processor; and
a memory for storing instructions executable by the processor;
wherein the processor is configured to implement a method according to one of the 1^{st} to 42^{th} embodiments.

### BRIEF DESCRIPTION OF THE DRAWINGS

- **Figure 1**: illustrates a video encoder for encoding according to an embodiment.
- **Figure 2**: illustrates a video decoder for decoding according to an embodiment.
- **Figure 3**: illustrates a system according to an embodiment comprising the video encoder of an embodiment and the video decoder of an embodiment.

### DESCRIPTION OF EXEMPLARY EMBODIMENTS

At first, principles on which embodiments are based are described:
Regarding the terms depth map and depth frame, a depth frame is a collection of distances from the camera to the point in the scene on the z-axis as illustrated in the schematic illustration of [11]: Use Depth in your Android app | ARCore | Google Developers, https://developers.google.com/ar/develop/java/depth/developer-guide.

This schematic illustration in [11] depicts an x-axis, a y-axis and a z-axis originating from a center, camera C. z represents a principal axis and the z-coordinate of a point A represents a depth of a point a.

An example of a depth camera is the Azure Kinect^{®}. It features both depth sensor as well as color sensor which are different and also spatially distant from each other, see [8], in particular the depth and color camera illustrated therein.

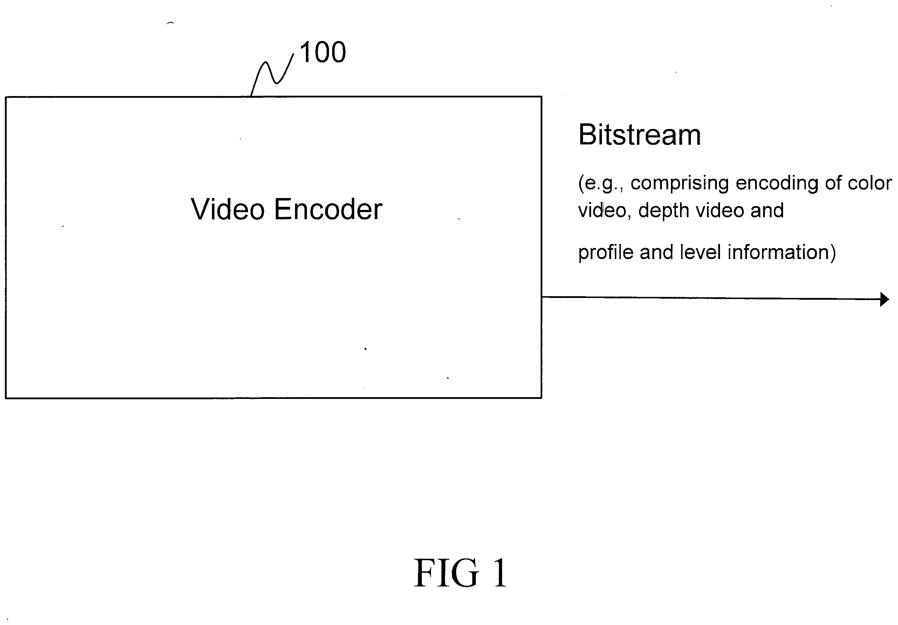

Regarding the RGBD format, examples of associating a color image with a one-channel image coding on a certain bit depth the depth information for each corresponding pixel in the color image are depicted in [5], see for example, figure 1 of [5].

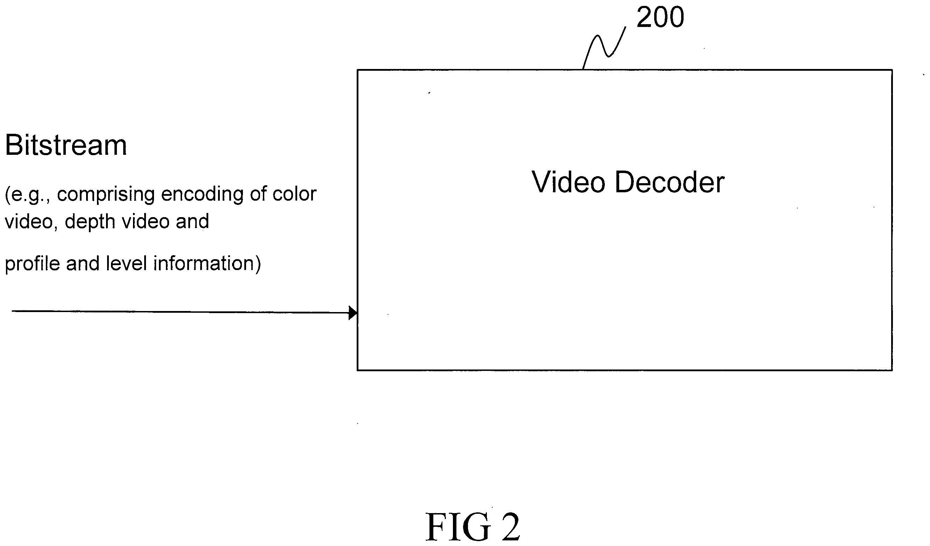

The same concept can be extended to video sequences wherein each image of the color video sequence is associated with a corresponding depth image from the depth video sequence, see [6]: Sun, Wenxiu, Lingfeng Xu, Oscar C. Au, Sung Him Chui, and Chun Wing Kwok. "An overview of free view-point depth-image-based rendering (DIBR)." In APSIPA Annual Summit and Conference, pp. 1023-1030. 2010. In particular, see figure 2 of [6], which depicts an RGBD format from real captured sequence.

The depth image itself may follow different conventions but it typically represents the distance from the camera to the point in the scene on the z-axis, see again the schematic illustration in [11] mentioned before, which depicts depth values according to the z-axis convention.

Various applications using depth data (RGBD use cases) exist in the prior art that can make use of RGBD format. It is to be noted that the RGBD format may be one way to realise the applications. Other formats such as point clouds, mesh, could also be used. However, the RGB format has strong advantages when it comes to real-time (no sensor fusion, 3D reconstruction needed by intermediate node), low cost (depth sensor are quite pervasive or even based on regular color sensor using stereoscopy), and distribution-friendliness (depth data can be carried as video which can leverage video encoders and decoder, especially in hardware, as well as widely deployed packaging and streaming format similar to 2D video streaming). ,

An example is a "Holographic" call, which may, e.g., be based on different underlying technologies.

In this context., a possible next step for video calls is the ability for the user to see the other person as a volumetric object and not as a flat image as conventionally experienced in current video calling applications (e.g. FaceTime^{®}, WhatsApp^{®} video, Skype^{®}, etc.).

In those "holographic" calls, the participants are not only transmitted as flat images but as a volumetric object on the receiver's end. There can be various modalities to experience the volumetric effect of the received video. For instance, one may wear a VR Head-mounted Display (HMD) and be able to see the person in the rendered 3D scene as a volumetric person. Another example is when the physical screen is capable of offering multiple views of the scene which allows the user to sense the depth effect. This latter case is for example illustrated by the Google^{®} Starline^{®} project (see [1]). Another example in this category is the Looking Glass^{®} Portrait (see [2]) for which the RGBD format is one of the recommended format as described in the documentation [3].

Examples of RGBD pictures can be found in the Looking Glass^{®} documentation (see [3]) In particular for the Looking Glass^{®} Portrait, the RGBD format is quite suited since this device features a depth camera sensor coupled to a conventional camera.

Yet another example is a AR glasses with 6DoF capability which blends the remote participant in the real scene of the receiving user. For example, the remote participant may appear standing or seating in the living room of the receiving user. As this user moves in the room, the perspective of the remote participant changes based on its new pose (i.e. head location plus direction).

Another example is remote rendering of complex 3D objects. Rendering 3D objects with a large number of vertices can be challenging. Every GPU has hardware-based limits as to how many frames per second can be rendered from a given object (limiting memory block, limiting number of operations per second, etc.). For applications dealing with complex 3D objects such as architecture, mechanical design, these 3D objects may quickly surpass the capacity of the local computer. Some companies may invest in powerful workstations for some of the employees but this comes with a high spending costs. Another approach is to rely on lightweight work stations connected to a network node rendering the complex objects. The result of the rendering for the current perspective of the user may be streamed in a video stream following a RGBD format. This allows volumetric rendering of the object on the user's side while the rendering effectively happens remotely. Also, even for a 2D display, the presence of the depth information in the RGBD format is useful when it comes to reproject the rendered view based on the latest viewing angle desired by the user.

An example of such rendering is the Azure Remote Rendering^{®} service described in [4]: About - Azure Remote Rendering | Microsoft Docs, https://docs.microsoft.com/en-us/azure/remote-rendering/overview/about
See, in particular, the high-level architecture of the Azure Remote Rendering depicted in [4]

From a RDBD video, it is indeed possible to create a stereo view from it, that is a view for the left eye and a view for the right eye. It should be noted that some services may also decide to stream back to the user the left and right view right away. However, this would mean that the inter-view distance would be baked in and targeted for this user and its device which requires more negotiation and per-device adaptation on the rendering node. Providing a RGBD video allows to be more device agnostic since the left and right view (in case of stereoscopic display, e.g. AR or VR HMD) would be generated on the user side based on the device characteristics and the inter-eye distance (also called interpupillary distance) of the user.

Regarding the generation of depth maps, sensor-based capture is employed. The process of sensing depth in a real scene is also known as range imaging and is described for example in [7]. As already mentioned above, there exist different sensor and techniques to generate depth map from sensed environment, such as stereo triangulation, sheet of light triangulation, structured light, time-of-flight, interferometry, and coded aperture.

Besides generation of depth maps using sensory information, new techniques recently emerged to generate depth maps based on a single 2D color image of the scene. These techniques are based on AI models, see [16]: Mertan, Alican, Damien Jade Duff, and Gozde Unal. "Single image depth estimation: An overview." Digital Signal Processing 123 (2022): 103441. (https://arxiv.org/pdf/2104.06456).

It is important to note that a depth map captured from a real scene is thus generally decoupled from the capture of the same scene with RGB sensors. Only in the case of stereo triangulation, the depth is inferred from color views of the scene.

As a result, captured depth map images can be of different spatial resolution, frame rate (temporal sampling), temporally uncoherent (image taken at different point in time), spatially uncoherent (physically distant) compared to the color view images. In addition, the projection image captured can also be different since different imaging system (lens system) can be used and may bring different type of distortions.

An example of such depth camera is the Kinect^{®}. It features both depth sensor as well as color sensor which are different and also spatially distant from each other as seen on Figure 12. In [8], a corresponding depth and color camera is depicted.

As a result, the images captures by those sensors do not represent exactly the same part of the scene as can be seen in [9], where in an illustration which depicts an RGB and depth camera field of view.

Since both images are captured from different sensors, the two pictures exhibit different characteristics as can be seen in the respective illustration of [10],

However, as described above, the application expects to be able to relate one pixel from the depth image to one pixel of the color image. As a result, the Kinect^{®} SDK also provides a transformation function, see [10], in order to convert either the color or the depth image to the other coordinate system. The respective illustration of [10] represents the two available image transformations. On the left side, the depth image at the bottom has been aligned with the color image. Conversely, on the right side, the color image has been aligned on the depth image.

Depth maps may, e.g., also be generated using computer-based generation. It is apparent how to generate a depth map from a virtual scene, since the environment is fully known and under the control of a 3D rendering engine.

Depth maps and confidence maps may, e.g., also be generated on a smartphone, e.g., employing Google^{®} Android^{®}.

See, in particular, [15]: Use Raw Depth in your Android app | ARCore | Google for Developers, https://developers.google.com/ar/develop/java/depth/raw-depth, which describes a Raw Depth API in contrast to a Full Depth API.

Moreover, the prior art provides concepts for the coding of depth data.

For example, different concepts for coding of depth data using a video-based codec are described in [12]: Chen, Ying, and Anthony Vetro. "Next-generation 3D formats with depth map support." IEEE MultiMedia 21, no. 2 (2014): 90-94.

In Figure 1 of [12], different extensions to the Advanced Video Codec (AVS) and High Efficiency Video Coding (HEVC) standards are illustrated, in particular, MVC plus, depth (MVC+D), AVC-compatible extension (3D-AVC), Multiview Extension of HEVC (MV-HEVC) and Advanced multiview and 3D extension of HEVC (3D-HEVC).

Detailed descriptions of the multiview extension of AVC, MVCD (MVC+D) and MV-HEVC are provided in [12].

In short, the MV-HEVC extension in the HEVC standard allows a bitstream to contain a Multiview bitstream, i.e. one or more views, each constituting one layer. In addition, MV-HEVC allows those views to have auxiliary layers carrying depth maps.

Important to note is that the HEVC standard defines, at the time of writing, only one profile which is the "Multiview Main profile". In terms of levels, the same levels defined in the main HEVC sections apply per layer. The levels are defined in clause A.4 and are identified by the following number identifier: 1, 2, 2.1, 3, 3.1, 4, 4.1, 5, 5.1, 5.2, 6, 6.1 and 6.2.

Consequently, an HEVC bitstream complying to the Multiview Main profile may have a number of views (i.e. layers) equal to the maximum allowed number of layers that is 63 as specified in the semantic of the vps_max_layers_minus1 parameters (cf, 7.4.3.1 Video parameter set RBSP semantics in the HEVC standard):
vps_max_layers_minus1 plus 1 specifies the maximum allowed number of layers in each CVS referring to the VPS. It is a requirement of bitstream conformance that, when vps_base_layer_internal_flag is equal to 0, vps_max_layers_minus1 shall be greater than 0. vps_max_layers_minus1 shall be less than 63 in bitstreams conforming to this version of this Specification. The value of 63 for vps_max_layers_minus1 is reserved for future use by ITU-T | ISO/IEC. Although the value of vps_max_layers_minus1 is required to be less than 63 in this version of this Specification, decoders shall allow the value of vps_max_layers_minus1 equal to 63 to appear in the syntax.

It is noted that the value of 63 for vps_max_layers_minus1 may be used to indicate an extended number of layers in a future extension where more than 63 layers in a bitstream need to be supported.

The variable MaxLayersMinus1 is set equal to Min( 62, vps_max_layers_minus1 ).

Moreover, [12] also provides detailed descriptions for 3D-AVC and 3D-HEVC.

A further concept for coding of depth data using a video-based codec is Multi-layer in WC. Multi-layer in VVC is described in [14]: Bross, Benjamin, Ye-Kui Wang, Yan Ye, Shan Liu, Jianle Chen, Gary J. Sullivan, and Jens-Rainer Ohm. "Overview of the versatile video coding (WC) standard and its applications." IEEE Transactions on Circuits and Systems for Video Technology 31, no. 10 (2021): 3736-3764.

There, [14] describes the basic multilayer coding design on page 3742, left column, and on page 3757, left column, which relates to dimensional video.

In summary, VVC allows to have one or more encoded layers in a bitstream. Those layers may have coding dependencies between them, e.g. in the case of spatial scalability. But those layers can also be independent, like in a case of a texture video sequence along with a depth map video sequence, each of them would constitute one independent layer, i.e. there is no coding dependencies between them.

[14] describes that WC v1 had 6 profiles, namely, as depicted in Figure 6 of [14], Main 10 and Main 10 4:4:4, which in general support all WC coding tools; Multilayer Main 10 and Multilayer Main 10 4:4:4, where the bitstream can contain multiple layers; and Main 10 Still Picture and Main 10 4:4:4 Still Picture, where the bitstream can contain only one picture, which needs to be intra-picture coded. These six profiles are described in detail on page 3750 of [14].

A WC bitstream complying to the Multi-layer Main 10 and Multi-layer Main 10 4:4:4 profiles may have a number of views (i.e. layers) equal to the maximum allowed number of layers that is 64 as specified in the semantic of the vps_max_layers_minus1parameters coded on 6 bits (cf, 7.4.3.3 Video parameter set RBSP semantics in the VVC standard):
**vps_max_layers_minus1** plus 1 specifies the number of layers specified by the VPS, which is the maximum allowed number of layers in each CVS referring to the VPS.

Also, the WC standard referring to the VSEI standard allows to transport the SDI SEI message. In effect, this enables to signal that an auxiliary picture refers to one or more primary picture. A primary picture is defined to be the pictures from layer for which no auxiliary type is associated with. The current auxiliary picture types are AUX_ALPHA for alpha channel and AUX_DEPTH for depth maps.

### (From 8.19.1 Scalability dimension information SEI message syntax:)

| | |
|---|---|
| scalability_dimension_info( payloadSize ) { | **Descriptor** |
| **sdi_max_lavers_minus1** | u(6) |
| **sdi_multiview_info_flag** | u(1) |
| **sdi_auxiliary_info_flag** | u(1) |
| if( sdi_multiview_info_flag ∥ sdi_auxiliary_info_flag ) { | |
| if( sdi_multiview_info_flag ) | |
| **sdi_view_id_len_minus1** | u(4) |
| for( i = 0; i <= sdi_max_lavers_minusl1; j++ ) { | |
| **sdi_layer_id[ i ]** | u(6) |
| if( sdi_multiview_info_flag ) | |
| **sdi_view_id_val[ i ]** | u(v) |
| if( sdi_auxiliary_info_flag ) | |
| **sdi_aux_id[ i ]** | u(8) |
| if( sdi_aux_id[ i ] > 0 ) { | |
| **sdi_num_associated_primary_layers_minus1[ i ]** | u(6) |
| for(j = 0; j <= sdi_num_associated_primary_layers_minus1[ i ]; j++ ) | |
| **sdi_associated_primary_layer_idx[ i ][ j ]** | u(6) |
| **}** | |
| } | |
| } | |
| } | |
| } | |

**sdi_num_associated_primary_layers_minus1[** i ] plus 1 specifies the number of associated primary layers of i-th layer, which is an auxiliary layer. The value of sdi_num_associated_primary_layers_minus1 [ i ] shall be less than the total number of primary layers.

**sdi_associated_primary_layer_idx[** i ][ j ] specifies the layer index of the j-th associated primary layer of the i-th layer, which is an auxiliary layer. The value of sdi_aux_id[ sdi_associated_primary_layer_idx[ i ][ j ] ] shall be equal to 0.

It is noted that an auxiliary layer describes a property of and applies to its associated primary layers.

The WC standard allows to encode a video texture and depth map in a multi-layer bitstream without specific coding tools for the depth video sequence. That is, the depth video sequence is treated as a regular 2D video sequence from the compression point of view.

Regarding the WC standard ISO/IEC 23090-3 (and similarly the HEVC standard) for RGBD video content, which contains typically two video sequences (texture and depth), one VVC conforming decoder of the Multi-layer Main 10 shall support up the decoding of up to 64 layers in the same bitstream while RGBD content only requires 2.

Moreover, for RGBD content carrying a third video sequence called the confidence map sequence, the VVC standard (and the HEVC standard) does not enable this use case because the WC standard (and the HEVC standard) does not allow to carry the information that an auxiliary picture is a confidence map; and the VVC standard (and the HEVC standard) does not allow an auxiliary picture to be auxiliary of another auxiliary picture. In other words, an auxiliary picture only refers to a primary picture.

In the following, particular embodiments are described:
A method for encoding according to an embodiment is provided. The method comprises:
- Encoding a first video sequence into a first layer of a group of layers of a bitstream.
- Encoding a second video sequence into a second layer of the group of layers of the bitstream. And:
- Writing or encoding profile and level information into the bitstream, wherein the profile and level information comprises a first constraint for the group of layers.

According to an embodiment, the first video sequence may, e.g., comprise a color video. Encoding the first video sequence into the first layer of the group of layers of the bitstream may, e.g., comprise encoding the color video into the first layer, wherein the first layer is a primary layer. Moreover, the second video sequence comprises a depth video. Encoding the second video sequence into the second layer of the group of layers of the bitstream may, e.g., comprise encoding the depth video into the second layer, wherein the second layer is an auxiliary layer.

Moreover, a method for decoding a bitstream according to an embodiment is provided. The bitstream comprises a first layer and a second layer of a group of layers. The first layer comprises an encoding of a first video sequence. The second layer comprises an encoding of a second video sequence. Furthermore, the bitstream comprises profile and level information comprising a first constraint for the group of layers. The method comprises:
- Determining the first constraint based on the bitstream. And:
- Decoding, depending on the first constraint, further data from the bitstream by decoding the first layer of the bitstream, and by decoding the second layer of the bitstream.

According to an embodiment, the first video sequence may, e.g., comprise a color video. The first layer may, e.g., be a primary layer. Moreover, the second video sequence may, e.g., comprise a depth video. The second layer may, e.g., be an auxiliary layer.

In an embodiment, the bitstream may, e.g., comprise, as the first constraint, an indication on a maximum number of layers of the group of layers being a maximum number of layers present in the bitstream for encoding the first video sequence, for encoding the second video sequence, and for possibly encoding further information being associated with the first video sequence or being associated with the second video sequence.

In an embodiment, the indication on the maximum number of layers may, e.g., be smaller than a maximum possible number of layers allowed by the video codec.

According to an embodiment, the maximum number of layers may, e.g., be 3.

In an embodiment, the bitstream may, e.g., comprise, as the first constraint, an indication on a maximum number of layers of the group of layers being a maximum number of layers present in the bitstream for encoding the first video sequence, for encoding the second video sequence, and for possibly encoding further information being associated with the first video sequence or being associated with the second video sequence.

According to an embodiment, the bitstream may, e.g., comprise another auxiliary layer of the group of layers being an auxiliary layer of the second layer which comprises an encoding of the second video data stream.

In an embodiment, the confidence map may, e.g., be encoded in another auxiliary layer of the group of layers. Said other auxiliary layer may, e.g., be an auxiliary layer of the second layer.

According to an embodiment, the confidence map may, e.g., be encoded as metadata in the bitstream. The method comprises encoding the confidence map in a Supplemental Enhancement Information message of the bitstream.

Furthermore, according to a further embodiment, a computer program for implementing the method of one of the preceding claims when being executed on a computer or signal processor is provided.

Moreover, according to another embodiment, a bitstream is provided. The bitstream, comprises a first layer of a group of layers, wherein the first layer comprises an encoding a first video sequence, and a second layer of the group of layers, wherein the second layer comprises an encoding of a second video sequence. Furthermore, the bitstream comprises profile and level information comprising a first constraint for the group of layers.

Furthermore, according to another embodiment, the profile and level information further may, e.g., comprise second constraints for the first layer and the second layer respectively.

**Figure 1** illustrates a video encoder 100 for encoding.

The video encoder 100 is configured for encoding a first video sequence into a first layer of a group of layers of a bitstream.

Moreover, the video encoder 100 is configured for encoding a second video sequence into a second layer of the group of layers of the bitstream.

Furthermore, the video encoder 100 is configured for writing or encoding profile and level information into the bitstream, wherein the profile and level information comprises a first constraint for the first video sequence and for the second video sequence.

**Figure 2** illustrates a video decoder 200 for decoding a bitstream.

The bitstream comprises a first layer of a group of layers. The first layer comprises an encoding of a first video sequence. Moreover, the bitstream comprises a second layer of the group of layers. The second layer comprises an encoding of a second video sequence. Furthermore, the bitstream comprises profile and level information comprising a first constraint for the first video sequence and for the second video sequence.

The video decoder 200 is configured for determining the first constraint.

Moreover, the video decoder 200 is configured for decoding, depending on the first constraint, further data from the bitstream by decoding the encoding of the first video sequence of the first layer of the bitstream, and by decoding the encoding of the second video sequence of the second layer of the bitstream.

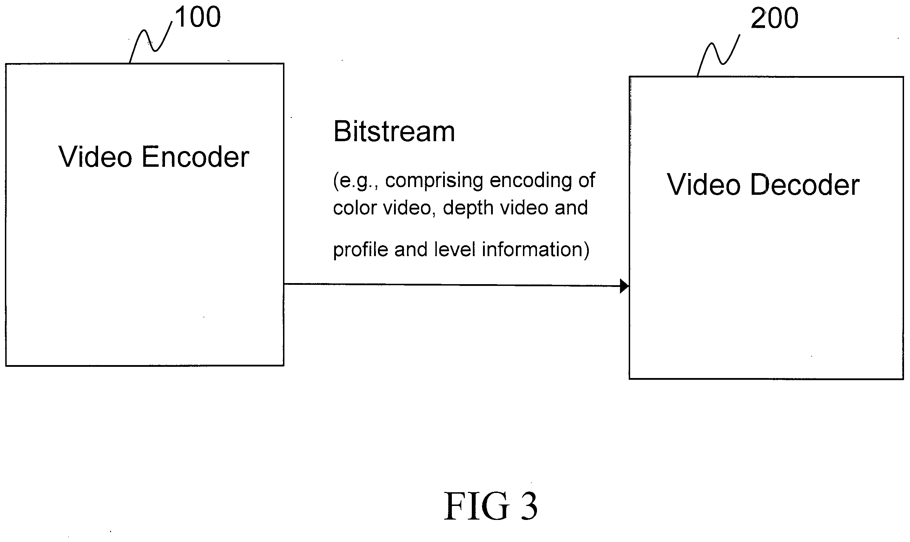

**Figure 3** illustrates a system according to an embodiment.

The system comprises a video encoder 100 according to the above-described embodiment for encoding.

Moreover, the system comprises a video decoder 200 for decoding.

In the following, a detailed presentation of the technical disclosure of particular embodiments is provided.

A problem solved by the disclosure is to allow to implement a decoder with only the necessary tools and the necessary resources (e.g. memory) in order to decode a video and depth content.

A key idea of the disclosure is to define a bitstream constraint on the maximum number of layers present in a bitstream which is a smaller value than the maximum possible number of layers allowed by a video codec.

This maximum number of layers may be part of a profile definition or as a new concept of global level which would coexist with the current concept of general level applicable per layer.

Lastly, the video and depth content may, e.g., contain confidence map data to enhance the usage of the depth map by the processing client, e.g., all of this in one single bitstream, and a transmission of this single bitstream is sufficient, instead of sending multiple bitstreams.

Inter alia, some embodiments provide the following technical benefits:
- A device generating RGBD content is able to produce a single bitstream with color, depth and the confidence map related to the depth map with the explicit signalling that the confidence map relates to the depth maps which in turns related to the color video. This avoids the encoding of two bitstreams one for the color and depth and one just for the confidence map.
- A receiving device can determine its ability of decoding the bitstream as per the disclosure by checking only the profile and level information. This saves unnecessary parsing of further layer information to try to determine the actual number of present layers and if this number of present layers is manageable.
- By enabling the transmission of a confidence map, this allows a receiving device, after decoding of the depth map frames, to adapt the post process based on the confidence transmitted by the source. For instance, the receiving device may decide to filter out samples in the depth map frames that have an insufficient confidence score. Another possibility is that a receiving device or an intermediate device may transform the depth maps frames to replace the samples in the depth map frames that have an insufficient confidence score with new sample generated artificially, e.g. using generative Al model, interpolation filter, etc, hence providing depth map frames with a higher quality for the targeted application.

In the following, different technical features of some of the embodiments as well as various related embodiments are provided.

A first feature of some particular embodiments is: Defining the maximum number of layers as a an interoperability point.

According to a first option, the first feature may, e.g., be realized as a profile "RGBD" profile

According to such an embodiment, the number of layers is defined as a property of the RGBD profile. Taking as assumption that this profile would be used for encoding the content generated by one capturing device, this means that the bitstream would contain at least 2 layers, one for the color/texture sequence and one for the depth map sequence. Optionally, a third layer may be present to transport the confidence map sequence. The confidence map concept is currently deployed for example as part of the depth API in Google^{®} Android^{®} (see above for more details).

A benefit of this option is that the profile is tailored for the need of RGBD content generation and perfectly address the type of depth camera/smartphone described above.

In addition, when bitstream as labelled compliant to this profile, all media aware entities, i.e. server, client, network nodes, know that there is at most 3 layers, and that there is at least one color and one depth layer. No additional signalling is needed to determine the maximum number of layers and the two layer types that primary, for the color sequence, and depth, for the depth map sequence, are already known.

For the purpose of enablement, the definition, e.g., for the VVC standard will be provided.

As the term RGBD is convenient but may be ambiguous in the context of video coding standard, and since the new profile according to some embodiments would not be tied to the RGB format but would work with any of them like YUV. Therefore, the term "video and depth profile" may, e.g., be employed, as this wording would be better fitting in those video coding standards.

In the following, embodiments are described with respect to WC video and depth profile.

In particular, embodiments for the Video and Depth Main 10 profile are now described.

Bitstreams conforming to the Video and Depth Main 10 shall obey the following constraints:
- Referenced SPSs shall have sps_chroma_format_idc equal to 0 or 1.
- Referenced SPSs shall have sps_bitdepth_minus8 in the range of 0 to 2, inclusive.
- Referenced SPSs shall have sps_palette_enabled_flag equal to 0.
- The tier and level constraints specified for the Video and Depth Main 10 profile in subclause A.4, as applicable, shall be fulfilled.
- The value of vps_max_layers_minus1 of each VPS shall be set equal to 2.
- There shall be a scalability dimension information (SDI) SEI message with the following values:
- sdi_multiview info flag shall be set to 0
- there shall be one value i for which sdi_aux_id[i] is equal to 2, i.e. AUX_DEPTH as defined in table 15.

Conformance of a bitstream to the Video and Depth Main 10 profile is indicated by general_profile idc being equal to 18.

Decoders conforming to the Video and Depth Main 10 profile at a specific level of a specific tier shall be capable of decoding all bitstreams for which all of the following conditions apply:
- The bitstream is indicated to conform to the Video and Depth Main 10, Main 10, or Main 10 Still Picture profile.
- The bitstream is indicated to conform to a tier that is lower than or equal to the specified tier.
- The bitstream is indicated to conform to a level that is not level 15.5 and is lower than or equal to the specified level.

The following should be noted:
- About "The value of vps_max_layers_minus1 of each VPS shall be set equal to 2.
   ∘ This is a new constraint compared to existing multilayer profile.
   ∘ The value '2', i.e. maximum number of layers 3, allows that the bitstream can contain 2 layers, color and depth, or 3 with the confidence map.
- About "Conformance of a bitstream to the Video and Depth Main 10 profile is indicated by general_profile idc being equal to 18."
   o The value 18 is a new declared value for this new profile.
- About "there shall be one value i for which sdi_aux_id[i] is equal to 2, i.e. AUX_DEPTH as defined in table 15"
   ∘ This means that the bitstream must have exactly one layer with depth content.

According to a second option, the first feature may, e.g., be realized as a maximum 3-independent-layer profile.

An advantage of this definition is that the profile could be used for several types of application and not only for RGBD.

Similarly, the profile could only define n maximum number of layers.

In the following, a WC 3-independent layer profile according to an embodiment is described.

In particular, a three-layer Main 10 profile according to a particular embodiment is described.

Bitstreams conforming to the Three-layer Main 10 shall obey the following constraints:
- Referenced SPSs shall have sps_chroma_format_idc equal to 0 or 1.
- Referenced SPSs shall have sps_bitdepth_minus8 in the range of 0 to 2, inclusive.
- Referenced SPSs shall have sps_palette_enabled_flag equal to 0.
- The tier and level constraints specified for the Three-layer Main 10 profile in subclause

A.4, as applicable, shall be fulfilled.
- The value of vps max layers_minus1 of each VPS shall be set equal to 2.

Conformance of a bitstream to the Three-layer Main 10 profile is indicated by general_profile_idc being equal to 18.

Decoders conforming to the Three-layer Main 10 profile at a specific level of a specific tier shall be capable of decoding all bitstreams for which all of the following conditions apply:
- The bitstream is indicated to conform to the Three-layer Main 10, Main 10, or Main 10 Still Picture profile.
- The bitstream is indicated to conform to a tier that is lower than or equal to the specified tier.
- The bitstream is indicated to conform to a level that is not level 15.5 and is lower than or equal to the specified level.

It should be noted, as seen above, such an embodiment does not constraint the fact that there shall be depth layer in this profile.

According to a second option, the first feature may, e.g., be realized as a level limitation of the Multilayer Main 10.

Instead of defining a new profile, one may introduce the concept of level that is applicable to a group of layers instead of just one layer as levels are currently defined. This way, a bitstream would be compliant to the existing Multilayer Main 10 profile (in case of WC) but it would also in addition to that be compliant to a given global level for the group of layers.

This has the benefit that several levels, e.g. 2, 3, 4, n layers, can be defined and be flexibly combined with the existing Multilayer Main 10 profile.

According to a particular embodiment, the concept of level for a group of layers as shown below is created.

In particular, this can be called a new type of level, the global level.

In the following, WC global level definition and signalling according to a particular embodiment is described.

One way to introduce the global level signalling is to modify the existing structure profile_tier_level to add a new syntax element called global_level_idc. This structure is present in different places in a VVC bitstream and in particular in the VPS and SPS.

| | |
|---|---|
| profile_tier_level( profileTierPresentFlag, MaxNumSubLayersMinus1 ) { | **Descriptor** |
| if( profileTierPresentFlag) { | |
| **general_profile_idc** | u (7) |
| **general_tier_flag** | u(1) |
| } | |
| **general_level_idc** | u(8) |
| **global_level_idc** | u(8) |
| **ptl_frame_only_constraint_flag** | u(1) |
| **ptl_multilayer_enabled_flag** | u(1) |
| if( profileTierPresentFlag) | |
| general_constraints_info( ) | |
| for( i = MaxNumSubLayersMinus1 - 1; i >= 0; i-- ) | |
| **ptl_sublayer_level_present_flag**[ i ] | u(1) |
| while( !byte_aligned( ) ) | |
| **ptl_reserved_zero_bit** | u(1) |
| for( i = M axNumSub Layers Minus 1 - 1; i >= 0; i-- ) | |
| if( ptl_sublayer_level_present_flag[ i ] ) | |
| **sublayer_level_idc[** i ] | u(8) |
| if( profileTierPresentFlag) { | |
| **ptl_num_sub_profiles** | u(8) |
| for( i = 0; i < ptl_num_sub_profiles; j++ ) | |
| **general_sub_profile_idc**[ i ] | u(32) |
| } | |
| } | |

**global level_idc** indicates a level to which the current CVS conforms as specified in Annex A. Bitstreams shall not contain values of global_level_idc other than those specified in Annex A. Other values of global_level_idc are reserved for future use by ITU-T | ISO/IEC.

And consequently, one can define the global level in a new table as follows:

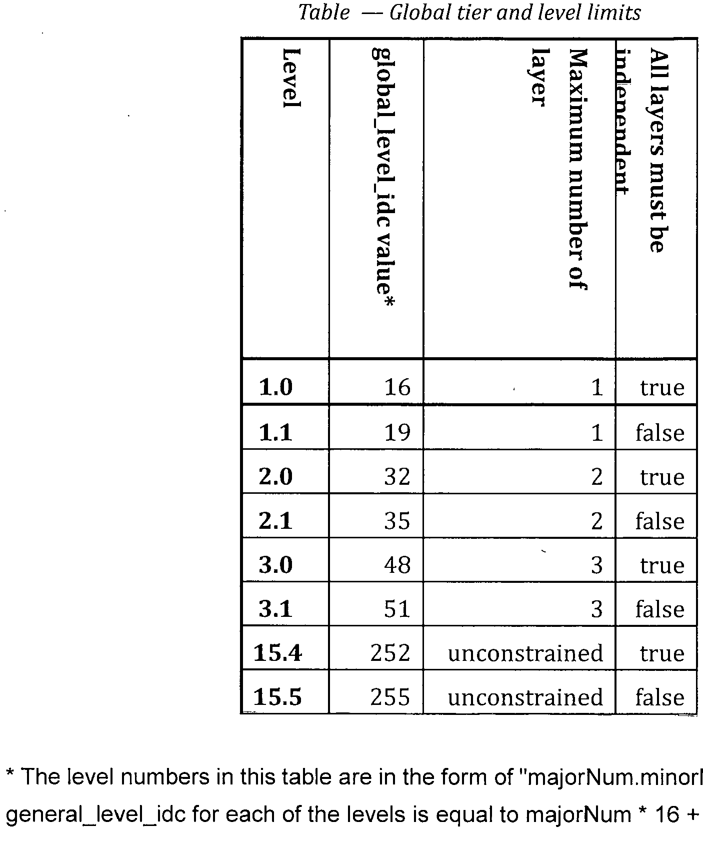

The following is noted:
- The convention to calculate the level indicator value is the same as the existing general level definition.
- The table can have more values for more levels as applications require it and/or as the decoder implementation requires more levels, e.g. hardware decoder could be built for guaranteeing 4 and 5 layers so those could be added.
- In this table, we propose the following parameters, max number of layers, directly needed by the disclosure, and a binary limit on whether the level guarantees that all the layers are independents. In this case, implementation of decoders are even easier and some application, e.g. RGBD, don't require coding dependencies between layers. This is why it is interesting to bring this property as a level definition.
- Other parameters defining the global levels could be added and this table is therefore not limiting in that regard.
- The proposed signalled as the disadvantage to change the current syntax of profile_tier_level, and thus break backward compatibility. As a result, any other location in the bitstream syntax may be envisioned wherein extension mechanism were originally designed. Alternatively, one may define a new SEI message or similar NAL unit based mechanism to convey the global level value without breaking the backward compatibility of current bitstream parsers. For future video coding specifications, this consideration does not apply. For brevity's sake, those alternative signalling are not presented here but they would all come down to signalling this global_level_idc in some data structure.

A second feature of some particular embodiments is: Enabling carrying a confidence map in a bitstream

According to a first option, the second feature may, e.g., be realized by defining a new confidence map type of auxiliary picture.

In this approach, one need to define a new code point to signal the nature of the auxiliary picture. Taking VVC as basis, the following modification would be done.

In the following, a scalability dimension information SEI message according to an embodiment is described.

In particular, a scalability dimension information SEI message syntax according to a particular embodiment is described.

| | |
|---|---|
| scalability_dimension_info( payloadSize ) { | **Descript or** |
| **sdi_max_layers_minus1** | u(6) |
| **sdi_multiview_info_flag** | u(1) |
| **sdi_auxiliary_info_flag** | u(1) |
| if( sdi_multiview_info_flag ∥ sdi_auxiliary_info_flag ) { | |
| if( sdi_multiview_info_flag ) | |
| **sdi_view_id_len_minus1** | u(4) |
| for( i = 0; i <= sdi_max_layers_minus1; j++ ) { | |
| **sdi_layer_id**[ i ] | u(6) |

| | |
|---|---|
| if( sdi_multiview_info_flag ) | |
| **sdi_view_id_val**[ i ] | U(V) |
| if( sdi_auxiliary_info_flag ) | |
| **sdi_aux_id[** i ] | u(8) |
| if( sdi_aux_id[ i ] > 0 ) { | |
| **sdi_num_associated_primary_layers_minus1**[ i **]** | u(6) |
| for(j = 0; j <= sdi_num_associated_primary_layers_minus1[ i ]; j++ ) | |
| **sdi_associated_primary_layer_idx**[ i ][ j ] | u(6) |
| } | |
| } | |
| } | |
| } | |
| } | |

### Scalability dimension information SEI message semantics

The scalability dimension information (SDI) SEI message provides the SDI for each layer in the current CVS, i.e., the CVS containing the SDI SEI message, such as 1) when there may be multiple views, the view ID of each layer; and 2) when there may be auxiliary information (such as depth or alpha) carried by one or more layers, the auxiliary ID of each layer.

[...]

**sdi_aux_id**[ i ] equal to 0 indicates that the i-th layer in the current CVS does not contain auxiliary pictures. sdi_aux_id[ i ] greater than 0 indicates the type of auxiliary pictures in the i-th layer in the current CVS as specified in Table 15. When sdi_auxiliary_info_flag is equal to 0, the value of sdi_aux_id[ i ] is inferred to be equal to 0.

**Table 15 - Mapping of sdi_aux_id[ i ] to the type of auxiliary pictures**

| **sdi_aux_id[ i ]** | **Name** | **Type of auxiliary pictures** |
|---|---|---|
| 1 | AUX_ALPHA | Alpha plane |
| 2 | AUX_DEPTH | Depth picture |
| 3 | AUX_CONFIDENCE | Confidence map |
| 3..127 | | Reserved |
| 128..159 | | Unspecified |
| 160..255 | | Reserved |

By convention a confidence map would define the maximum value of the image, e.g. 255 for 8 bit images, to correspond to confidence of value 1.0, i.e. maximum confidence. Conversely, the minimum value 0 would correspond to the value 0.0, i.e. the minimum confidence value. In case, the range of the confidence map frames is limited, that is it doesn't use the entire bit depth range, then the mapping of highest and lowest confidence value should consider the actual range of values used. For example, if the confidence map frames are coded monochannel on 8 bit, the possible values range from 0 to 255 but if the coded range is actually smaller, sometimes called limited range, e.g. 16-235, 16 and 235 would correspond to lowest and highest confidence value, respectively.

According to a second option, the second feature may, e.g., be realized by storing each confidence map as a SEI associated with the depth map layer

Thus, another option which requires less layers to produce is to store the confidence map as an encoded array of values which represent the confidence of each sample in the depth map.

In this case, the compression of the sequence of confidence map may be less efficient compared to using auxiliary pictures. However, in case the confidence map contains only binary values, i.e. each confidence map sample is a Boolean, then this approach may be more efficient then using an auxiliary picture since, in this case, the encoded confidence map will use 8 bits per value at the minimum.

| | |
|---|---|
| confidence_map( payloadSize) { | **Descriptor** |
| **cm_cancel_flag** | u(1) |
| if(! idsbm_cancel_flag) { | |
| **cm_height** | ue(v) |
| **cm_width** | ue(v) |
| for(i=0; i < cm_height; i++) | |
| for(j=0; j < cm_width; j++) | |
| **cm_value[i][j]** | u(8) |
| } | |
| } | |

The semantics may, e.g., be as follows:
The confidence map SEI message carries parameters that describe the confidence value associated with the samples of current coded image.

**cm_cancel_flag** equal to 1 indicates that the SEI message cancels the persistence of any previous confidence map SEI message. When equal to 0, the information that should be considered follows.

**cm_height** specifies the height of the confidence map.

**cm_width** specifies the width of the confidence map.

**cm_value[** i ][ j ] specifies the confidence value of the collocated sample in the associated decoded image. When cm_value[ i ][ j ] is equal to 255, the collocated sample has the highest confidence value. When cm_value [ i ][ j ] is equal to 0, the collocated sample has the lowest confidence value.

It is noted that, as stated earlier, in another variant of the one above, the confidence value may be reduced to a binary value (0 or 1) (in the example above, it is an 8-bit value), in this case this signalling approach of the confidence map may be more efficient than the auxiliary picture approached.

A third feature of some particular embodiments is: Enabling auxiliary pictures of auxiliary pictures

Signalling a confidence map (feature #2) when the confidence map is an auxiliary picture is not enough. The WC standard defines the concept of auxiliary layer being associated with one or more primary layers.

Here is the signalling element of this concept according to a particular embodiment:

| | |
|---|---|
| scalability_dimension_infof payloadSize ) { | **Descriptor** |
| **sdi_max_layers_minus1** | u(6) |
| **sdi_multiview_info_flag** | u(1) |
| **sdi_auxiliary_info_flag** | u(1) |
| if( sdi_multiview_info_flag ∥ sdi_auxiliary_info_flag) { | |
| if( sdi_multiview_info_flag ) | |
| **sdi_view_id_len_minus1** | u(4) |

| | |
|---|---|
| for( i = 0; i <= sdi_max_layers_minus1; j++ ) { | |
| sdi_layer_id[ i ] | u(6) |
| if( sdi_multiview_info_flag ) | |
| **sdi_view_id_val[** i ] | u(v) |
| if( sdi_auxiliary_info_flag ) | |
| **sdi_aux_id[** i ] | u(8) |
| if( sdi_aux_id[ i ] > 0 ) { | |
| **sdi_num_associated_primary_layers_minus1[** i ] | u(6) |
| for( j = 0; j <= sdi_num_associated_primary_layers_minus1[ i ]; j++ ) | |
| **sdi_associated_primary_layer_idx[** i ] [ j ] | u(6) |
| } | |
| } | |
| } | |
| } | |
| } | |

If sdi_aux_id[ i ] is equal to 0, the i-th layer is referred to as a primary layer. Otherwise, the i-th layer is referred to as an auxiliary layer. When sdi_aux_id[ i ] is equal to 1, the i-th layer is also referred to as an alpha auxiliary layer. When sdi_aux_id[ i ] is equal to 2, the i-th layer is also referred to as a depth auxiliary layer.

**sdi_num_associated_primary_layers_minus1[** i ] plus 1 specifies the number of associated primary layers of i-th layer, which is an auxiliary layer. The value of sdi_num_associated_primary_layers_minus1[ i ] shall be less than the total number of primary layers.

**sdi_associated_primary_layer_idx[** i ][ j ] specifies the layer index of the j-th associated primary layer of the i-th layer, which is an auxiliary layer. The value of sdi_aux_id[ sdi_associated_primary_layer_idx[ i ][ j ] ] shall be equal to 0.

It is noted that an auxiliary layer describes a property of and applies to its associated primary layers.

"The value of sdi_aux_id[ sdi_associated_primary_layer_idx[ i ][ j ] ] shall be equal to 0." is the key limitation, one cannot construct an auxiliary layer of an auxiliary layer. However, as we have seen in the background, the concept of confidence map is key to enhance the processing of video and depth content (RGBD) by transmitting along the confidence map related to the depth map.

Therefore, this deficiency of the WC standard needs to be resolved.

According to a first option, the third feature may, e.g., be realized by relaxing the existing syntax element semantics.

For example, according to a particular embodiment:

| | |
|---|---|
| scalability_dimension_info( payloadSize ) { | **Descriptor** |
| **sdi_max_layers_minus1** | u(6) |
| **sdi multiview info_flag** | u(1) |
| **sdi_auxiliary_info_flag** | u(1) |
| if( sdi_multiview_info_flag ∥ sdi_auxiliary_info_flag ) { | |
| if( sdi_multiview_info_flag ) | |
| **sdi_view_id_len_minus1** | u(4) |
| for( i = 0; i <= sdi_max_layers_minus1; j++ ) { | |
| **sdi_layer_id[** i ] | u(6) |
| if( sdi_multiview_info_flag ) | |
| **sdi_view_id_val[** i ] | u (v) |
| if( sdi_auxiliary_info_flag ) | |
| **sdi_aux_id[** i ] | u (8) |
| if( sdi_aux_id[ i ] > 0 ) { | |
| **sdi_num_associated_layers_minus1[** i ] | u(6) |
| for( j = 0; j <= sdi_num_associated_layers_minus1[ i ]; j++ ) | |
| **sdi_associated_layer_idx[** i ] [ j ] | u(6) |
| } | |
| } | |
| } | |
| } | |
| } | |

If sdi_aux_id[ i ] is equal to 0, the i-th layer is referred to as a primary layer. Otherwise, the i-th layer is referred to as an auxiliary layer. When sdi_aux_id[ i ] is equal to 1, the i-th layer is also referred to as an alpha auxiliary layer. When sdi_aux_id[ i ] is equal to 2, the i-th layer is also referred to as a depth auxiliary layer.

**sdi_num_associated_layers_minus1[** i ] plus 1 specifies the number of associated layers of i-th layer. The value of sdi_num_associated _layers_minus1[ i ] shall be less than or equal to the total number of layers minus one.

**sdi_associated_layer_idx[** i ][ j ] specifies the layer index of the j-th associated layer of the i-th layer.

As seen above, the modification are loosening the semantic of the existing syntax elements to allow that an auxiliary layer may also be referred to by another auxiliary layer.

According to a second option, the third feature may, e.g., be realized by defining a new syntax element for auxiliary layers referred to by an auxiliary layer.

In this variant, we introduce a new syntax element only in the case of the confidence map.

For example, according to a particular embodiment:

| | |
|---|---|
| scalability_dimension_info( payloadSize ) { | **Descriptor** |
| **sdi_max_layers_minus1** | u(6) |
| **sdi_multiview_info_flag** | u(1) |
| **sdi_auxiliary_info_flag** | u (1) |
| if( sdi_multiview_info_flag ∥ sdi_auxiliary_info_flag ) { | |
| if( sdi_multiview_info_flag ) | |
| **sdi_view_id_len_minus1** | u(4) |
| for( i = 0; i <= sdi_max_layers_minus1; j++ ) { | |
| **sdi_layer_id[** i ] | u(6) |
| if( sdi_multiview_info_flag ) | |
| **sdi_view_id_val[** i ] | u(v) |
| if( sdi _ auxiliary_info _ flag ) | |
| **sdi_aux_id[** i ] | u(8) |
| if( sdi_aux_id[ i ] > 0 ) { | |

| | |
|---|---|
| **sdi_num_associated_primary_layers_minus1[** i ] | u(6) |
| for( j = 0; j <= sdi_num_associated_primary_layers_minus1[ i ]; j++ ) | |
| **sdi_associated_primary_layer_idx[** i ][ j ] | u(6) |
| } | |
| if( sdi_aux_id[ i ] == 3 ) { | |
| **sdi_num_associated_aux_depth_layers_minus1[** i ] | u(6) |
| for( j = 0; j <= sdi_num_associated_aux_depth_layers_minus1[ i ]; j++ ) | |
| **sdi_associated_aux_depth_layer_idx[** i ] [ j ] | u (6) |
| } | |
| } | |
| } | |
| } | |
| } | |

**sdi_num_associated_aux_depth_layers_minus1** [ i ] plus 1 specifies the number of associated auxiliary depth layers of i-th layer. The value of sdi_num_associated_aux_depth_layers_minus1 [ i ] shall be less than or equal to the total number of auxiliary depth layers.

**sdi_associated_aux_depth_layer_idx** [ i ][ j ] specifies the layer index of the j-th associated auxiliary depth layer of the i-th layer. The value of sdi_aux_id[ sdi_associated_aux_depth_layer_idx[ i ][ j ] ] shall be equal to 2.

It is noted that the disadvantage of this approach is that the change is not backward compatible with existing parser when it comes to modifying the WC standard.

### Summarizing:

A particular embodiment may, e.g., provide a device for encoding a video and depth sequence into a bitstream with one or more of the device steps:
1. Obtain a color video and a associated depth video.
2. If available, obtain a sequence of confidence maps associated with the depth video.
3. Encode the color video as a primary layer, the depth video as an auxiliary layer of the color video and the confidence map sequence
   a. In one case, the confidence map sequence is encoded as an auxiliary layer of the depth video (which is also by itself an auxiliary layer).
   b. In another case, each confidence map of each depth frame is coded in an SEI message (i.e. the confidence map is not encoded as an image but encoded as any other metadata in the bitstream).
4. Generate profile and level information message for each layer and for the group of layer indicating the constraints fulfilled by the group of layers.
5. Write into the bitstream the encoded frames of each layer (at least since many other metadata required for decoding can be also written into the bitstream) as well as the profile and level information message for each layer and for the group of layers.

A particular embodiment may, e.g., provide a device for decoding a bitstream contained an encoded video and depth sequence with one or more of the device steps:
1. Obtain information about the profile and level of the bitstream, per layer (conventional) but also per group of layers (new).
   a. In a specific case, there is only one group of layer in the bitstream.
2. Based on the profile and level information, determine the capability of the decoder to decode the bitstream.
3. If the decoder is capable of decoding the bitstream, obtain information about the layers present in the bitstream to initialize the decoder resources.
4. Based on the layer information, determine, for each layer, if a layer is an auxiliary layer of another layer.

For "information about the profile and level of the bitstream", see the options of the first feature above for the different embodiments.

For "obtain information about the layers and their nature present in the bitstream", see the options of the second feature above for the different embodiments.

For the way to determine "if a layer is an auxiliary layer of another layer", see the options of the third feature above for the different embodiments.

Embodiments can be equally applied to still pictures, i.e. images, and video, i.e. sequence of images.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### ABBREVIATIONS:

- AOM: Alliance for Open Media
- AV1: AOMedia Video 1
- AVC: ISO/IEC 14496-10 Advanced Video Coding (AVC) / ITU-T Rec. H.264
- CVS: Coded Video Sequence
- H.265: ITU's name of HEVC
- HEVC: ISO/IEC 23008-2 High Efficiency Video Coding (HEVC) / ITU-T Rec. H.265
- DIBR: Depth-Image-Based Rendering
- MPEG: Moving Picture Experts Group
- MVC: Multiview Video Coding [refers to ISO/IEC 14496-10 when the techniques in Annex H (Multiview Video Coding) are in use]
- MVC+D: Multiview Video Coding Plus Depth [refers to ISO/IEC 14496-10 when the techniques in Annex I (Multiview and Depth Video Coding) are in use]
- MV-HEVC: Multiview High Efficiency Video Coding [refers to ISO/IEC 23008-2 when the techniques in Annex G (Multiview High Efficiency Video Coding) are in use]
- MVD: Multiview Video Coding Plus Depth [refers to ISO/IEC 14496-10 when the techniques in Annex I (Multiview and Depth Video Coding) or Annex J (Multiview and Depth Video with Enhanced Non-Base View Coding) are in use]
- RGBD: Red Green Blue (RGB) plus depth, by extension any color image format associated with a depth map (static images or video sequence)
- RGB+D: see RGBD
- RTP: Real-time Transport Protocol
- SEI: Supplemental Enhancement Information
- WC: ISO/IEC 23090-3 Versatile Video Coding (WC) / ITU-T Rec. H.266
- VSEI: Versatile Supplemental Enhancement Information messages for coded video bitstreams / ITU-T Rec H.274

### REFERENCES:

[1] Project Starline: Feel like you're there, together (blog.google), https://blog.google/technology/research/project-starline/
[2] Looking Glass Portrait - Looking Glass Factory, https://lookingglassfactory.com/portrait#usecases
[3] RGBD Photo / Video - Looking Glass Documentation (lookingglassfactory.com), https://docs.lookingglassfactory.com/3d-viewers/holoplay-studio/rgbd-photo-video
[4] About - Azure Remote Rendering | Microsoft Docs, https://docs.microsoft.com/en-us/azure/remote-rendering/overview/about
[5] Fehn, Christoph. "A 3D-TV approach using depth-image-based rendering (DIBR)." In Proc. of VIIP, vol. 3, no. 3. 2003.
[6] Sun, Wenxiu, Lingfeng Xu, Oscar C. Au, Sung Him Chui, and Chun Wing Kwok. "An overview of free view-point depth-image-based rendering (DIBR)." In APSIPA Annual Summit and Conference, pp. 1023-1030. 2010.
[7] Wikipedia contributors, "Range imaging," Wikipedia, The Free Encyclopedia, https:Hen.wikipedia.org/w/index.php?title=Range_imaging&oldid=1050828429 (accessed May 10, 2022).
[8] Azure Kinect DK coordinate systems | Microsoft Docs, https://docs.microsoft.com/en-us/azure/kinect-dk/coordinate-systems
[9] Azure Kinect DK hardware specifications | Microsoft Docs, https://docs.microsoft.com/en-us/azure/kinect-dk/hardware-specification
[10] Use Azure Kinect Sensor SDK image transformations | Microsoft Docs, https://docs.microsoft.com/en-us/azure/kinect-dk/use-image-transformation
[11] Use Depth in your Android app | ARCore | Google Developers, https://developers.google.com/ar/develop/java/depth/developer-guide
[12] Chen, Ying, and Anthony Vetro. "Next-generation 3D formats with depth map support." IEEE MultiMedia 21, no. 2 (2014): 90-94.
[13] Use Azure Kinect Sensor SDK to record file format | Microsoft Docs, https://docs.microsoft.com/en-us/azure/kinect-dk/record-file-format
[14] Bross, Benjamin, Ye-Kui Wang, Yan Ye, Shan Liu, Jianle Chen, Gary J. Sullivan, and Jens-Rainer Ohm. "Overview of the versatile video coding (WC) standard and its applications." IEEE Transactions on Circuits and Systems for Video Technology 31, no. 10 (2021): 3736-3764.
[15]Use Raw Depth in your Android app | ARCore | Google for Developers, https://developers.google.com/ar/develop/java/depth/raw-depth
[16]Mertan, Alican, Damien Jade Duff, and Gozde Unal. "Single image depth estimation: An overview." Digital Signal Processing 123 (2022): 103441. (https://arxiv.org/pdf/2104.06456).

## Claims

1. A method for encoding, wherein the method comprises:
encoding a first video sequence into a first layer of a group of layers of a bitstream,
encoding a second video sequence into a second layer of the group of layers of the bitstream, and
writing or encoding profile and level information into the bitstream, wherein the profile and level information comprises a first constraint for the group of layers.

2. A method for decoding a bitstream, wherein the bitstream comprises a first layer and a second layer of a group of layers, wherein the first layer comprises an encoding of a first video sequence, wherein the second layer comprises an encoding of a second video sequence, and wherein the bitstream comprises profile and level information comprising a first constraint for the group of layers, wherein the method comprises:
determining the constraint based on the bitstream, and
decoding, depending on the constraint, further data from the bitstream by decoding the first layer of the bitstream, and by decoding the second layer of the bitstream.

3. A method according to one of the preceding claims,
wherein the first video sequence comprises a color video, wherein the first layer is a primary layer, wherein the second video sequence comprises a depth video, wherein the second layer is an auxiliary layer.

4. A method according to one of the preceding claims,
wherein the bitstream comprises, as the constraint, an indication on a maximum number of layers of the group of layers being a maximum number of layers present in the bitstream for encoding the first video sequence, for encoding the second video sequence, and for possibly encoding further information being associated with the first video sequence or being associated with the second video sequence.

5. A method according to claim 4,
wherein the indication on the maximum number of layers is smaller than a maximum possible number of layers allowed by a video codec.

6. A method according to claim 4 or 5,
wherein the maximum number of layers is 3.

7. A method according to one of the preceding claims,
wherein the bitstream comprises an encoding of a confidence map being associated with the second video sequence, wherein the confidence map indicates information on a confidence of pixels or portions of images of the second video sequence.

8. A method according to one of the preceding claims,
wherein the bitstream comprises another auxiliary layer of the group of layers being an auxiliary layer of the second layer which comprises an encoding of the second video data stream.

9. A method according to claim 7,
wherein the confidence map is encoded as metadata in the bitstream;
wherein the method comprises encoding the confidence map in a Supplemental Enhancement Information message of the bitstream.

10. A method according to one of the preceding claims,
wherein the profile and level information further comprises second constraints for the first layer and the second layer respectively.

11. A computer program for implementing the method of one of the preceding claims when being executed on a computer or signal processor.

12. A bitstream, comprising:
a first layer of a group of layers, wherein the first layer comprises an encoding a first video sequence,
a second layer of the group of layers, wherein the second layer comprises an encoding of a second video sequence, and
profile and level information comprising a first constraint for group of layers.

13. A bitstream, formatted to include the first video sequence, the second video sequence, and the profile and level information, wherein the bitstream is obtained from a method according to claim 1.

14. An apparatus comprising means for performing one of the methods claimed in any one of claims 1 to 10.

15. An electronic device, comprising:
a processor; and
a memory for storing instructions executable by the processor;
wherein the processor is configured to implement a method claimed in any one of claims 1 to 10.
